# EUROPEAN PATENT APPLICATION

(11) **EP 2 781 540 A1**
(43) Date of publication of application: **24.09.2014**
(21) Application number: 14158933.3
(22) Date of filing: 11.03.2014
(51) Int. Cl.: C08J 5/24, B29C 37/00

(54) **A method of making a laminate component and method of removing voids from a pre-preg ply and a pre-preg component**

(30) Priority: 15.03.2013 US 201313838986
(71) Applicant: General Electric Company, Schenectady, New York 12345 (US)
(72) Inventor: Moors, Thomas Michael, Greenville, SC South Carolina 29615 (US); Riahi, Amir, Greenville, SC South Carolina 29615 (US)
(74) Representative: Szary, Anne Catherine

(57) **Abstract**

A method of making a laminate component and method of removing voids (106) from a pre-preg ply and pre-preg component are provided. The method of making a laminate includes laying up a plurality of pre-preg plies in a desired geometry, the plurality of pre-preg plies having a plurality of fibers (500) and a resin (502). The method includes creating at least one void-reducing channel (200) in at least one ply (204) of the plurality of pre-preg plies, the void-reducing channel (200) being perpendicular to a fiber orientation (504) in the at least one ply (204). The void reducing channel (200) locally re-orients the fibers (500) adjacent to the void-reducing channel (200) in the at least one pre-preg ply (204). The method includes laminating the plurality of pre-preg plies. The resin (502) fills the at least one void-reducing channel (200) and the laminate component has a porosity margin of about 1.5%.

## Description

### FIELD OF THE INVENTION

The present invention relates generally to laminates pre-preg composites. More specifically, to a method of making a laminate components and a method of removing voids from a pre-preg ply and a pre-preg component.

### BACKGROUND OF THE INVENTION

Many manufacturing processes today call for the fabrication of components from "composite" materials, also known as fiber-reinforced polymers. Fiber-reinforced polymers are comprised of reinforcing fibers that are positioned in a polymer matrix. Commonly, the reinforcing fibers are fiberglass, although high strength fibers such as aramid and carbon are used in advanced applications, such as aerospace applications. The polymer matrix is typically a thermoset resin, such as, polyester, vinyl ester, or epoxy. Specialized resins, such as phenolic, polyurethane, and silicone are used for certain applications.

A common defect associated with composite structures is voids which include air inclusions or intra-laminar voids located inside the composite material. The term "intralaminar voids" refers to voids that are trapped within one ply (a.k.a. lamina or layer) as opposed to interlaminar where it applies to voids between plies. Such voids weaken the composite material and sometimes must be repaired. Another defect associated with composite structures is dry fibers, namely fibers that are not impregnated by resin. The dry fibers weaken the composite material and may result in structural damage.

One type of repair for voids and interlaminar defects is resin injection. During one type of resin injection repair, two holes are drilled through the composite material to the void or delamination inside the composite material. The two holes are typically drilled at opposite ends of the defect. Resin is then either driven into one hole using pressure until it exits the second hole, or resin is drawn into one hole by applying a vacuum to the second hole. When using such a two-hole process, air entrapment in the void is common and therefore the resin does not completely fill the void. In addition, since two holes must be drilled in the structure, the already weak structure may be further weakened.

Therefore a method of making a laminate component and a method of removing voids from a pre-preg ply and a pre-preg component that do not suffer from the above drawbacks is desirable in the art.

### SUMMARY OF THE INVENTION

According to an exemplary embodiment of the present disclosure, a method of making a laminate component is provided. The method includes laying up a plurality of pre-preg plies in a desired geometry, the plurality of pre-preg plies having a plurality of fibers and a resin. The method includes creating at least one void-reducing channel in at least one ply of the plurality of pre-preg plies, the void-reducing channel being perpendicular to a fiber orientation in the at least one ply. The void reducing channel locally re-orients the fibers adjacent to the void-reducing channel in the at least one pre-preg ply. The method includes laminating the plurality of pre-preg plies, wherein the resin fills the at least one void-reducing channel, and the laminate component has a porosity margin of about 1.5%.

According to another exemplary embodiment of the present disclosure, a method of removing voids from a pre-preg ply having a plurality of fibers and a resin is provided. The method includes identifying at least one void in the pre-preg ply. The method includes creating at least one void-reducing channel adjacent to the at least one identified void in the ply, the void-reducing channel being perpendicular to a fiber orientation in the ply. The void-reducing channel locally re-orients the fibers adjacent to the void-reducing channel and increases through-thickness air-permeability in the pre-preg ply. The method includes laminating the pre-preg ply, wherein the resin fills the at least one void and the at least one void-reducing channel.

According to another exemplary embodiment of the present disclosure, a method of removing voids from a pre-preg component is provided. The method includes providing the pre-preg component, the pre-preg component having a plurality of plies including a plurality of fibers and a resin. The method includes identifying at least one void in at least one ply of the pre-preg component. The method includes creating at least one void-reducing channel through a portion of the identified at least one void, the void-reducing channel being perpendicular to a fiber orientation in the at least one ply, wherein the void-reducing channel locally re-orients the fibers adjacent to the void-reducing channel in the at least one pre-preg ply. The method includes laminating the pre-preg component, wherein the resin fills the at least one void-reducing channel and the at least one void.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a cross-sectional schematic of a pre-preg laminate composite having voids of the present disclosure.
FIG. 2 is a cross-sectional schematic of a pre-preg laminate composite having voids and void-reducing channels of the present disclosure.
FIG. 3 is a spanwise view of a plurality of pre-preg plies having void-reducing channels of the present disclosure.
FIG. 4 is a side view of a plurality of pre-preg plies having a void and void-reducing channel of the present disclosure.
FIG. 5 is a schematic perspective view of the fiber orientation of a pre-preg ply having a void of the present disclosure.
FIG. 6 is a schematic perspective view of the void-reducing channel locally reoriented the fiber orientation of a pre-preg ply of the present disclosure.
FIG. 7 is a flow chart of a method of removing voids from pre-preg ply of the present disclosure.
FIG. 8 is a flow chart of a method of making a laminate component of the present disclosure.
FIG. 9 is a flow chart of a method of removing voids from pre-preg component of the present disclosure.
FIG. 10 is a plot comparing the porosity margin according to an embodiment of the present disclosure and a comparative example.

Wherever possible, the same reference numbers will be used throughout the drawings to represent the same parts.

### DETAILED DESCRIPTION OF THE INVENTION

Provided is a method of making laminate components and a method of removing voids from a pre-preg ply and a pre-preg component. The method of making the laminate components includes laying up a plurality of pre-preg plies in a desired geometry, the plurality of pre-preg plies having a plurality of fibers and a resin. The method includes creating at least one void-reducing channel in at least one ply of the plurality of pre-preg plies. The void-reducing channel is perpendicular to a fiber orientation in the at least one pre-preg ply. The void reducing channel locally re-orients the fiber orientation adjacent to the void-reducing channel in the at least one pre-preg ply. The method includes laminating the plurality of pre-preg plies, wherein the resin fills the at least one void-reducing channel. The resulting laminate component has a porosity margin of about 1.5%.

One advantage of an embodiment of the present disclosure includes providing through-thickness passage ways to facilitate breathing and air-evacuation of thick pre-preg laminates. Another advantage of an embodiment is a lower porosity pre-preg laminate. Yet another advantage of an embodiment is improved quality and reproducibility of pre-preg laminates. Another advantage of an embodiment is increased compression strength of the pre-preg laminate. Yet another advantage of an embodiment is increased modulus of the pre-preg laminate. Another advantage of an embodiment of the present disclosure is that the methods allow for cycle time reduction through faster and less complicated non-destructive inspections. Yet another advantage of an embodiment is the pre-pregs plies and laminates may be manufactured at greater speeds because the intra-laminar voids resulting from the higher processing speeds may be healed.

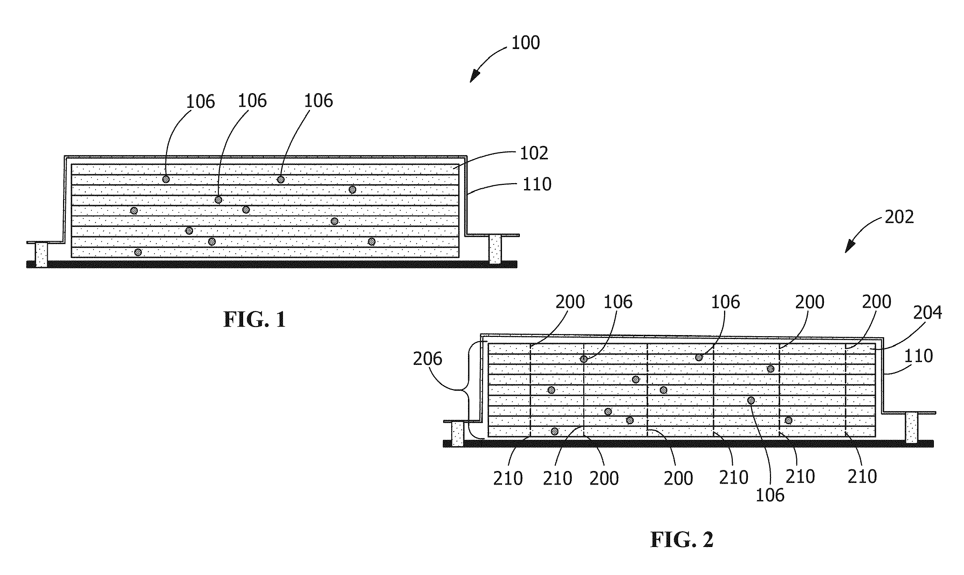

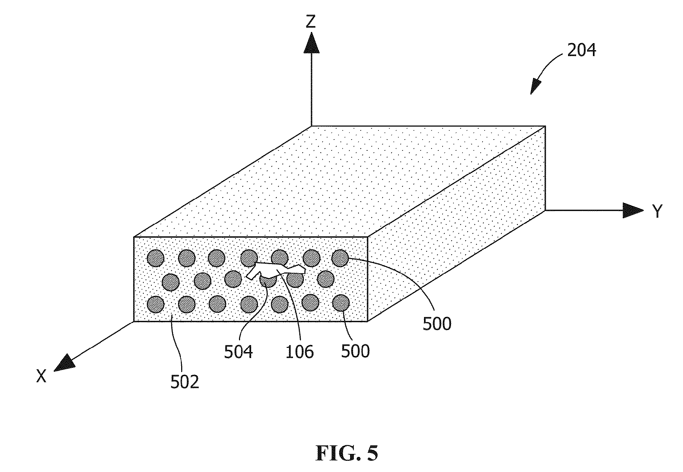

FIG. 1 is a cross-sectional schematic of a laminate 100 in a laminating member 110, after lamination but prior to removal of laminate 100 from laminating member 110. As depicted, laminate 100 includes a plurality of stacked plies 102 having a plurality of voids 106 therein. The term "void" indicates any type of defect forming a cavity in pre-preg plies 102, whether it is an air inclusion or dry fibers formed during the fabrication of pre-preg ply 102, an interlaminar defect formed due to impact or other stress, or any other cause of a cavity within pre-preg ply 102. Interlaminar voids are generally formed during the fabrication process of pre-preg, and the size of the interlaminar voids can be aggravated by the lamination process. FIG. 2 is a sectional schematic of a pre-preg component 202, prior to lamination, in a laminating member 110. In one embodiment, pre-preg component 202 is a unidirectional pre-preg material having high tow/fiber count. In one embodiment, fibers 500 (see FIG. 5) of pre-preg plies 204 of pre-preg component 202 have the same directional orientation, such as 0°, ±45°, and ± 90°. In another embodiment, fiber orientation includes biaxial fibers, such as, for example, ±45° or ± 90°orientation. In one embodiment, pre-preg plies include fibers, such as, but not limited to, carbon, glass, basalt, poly-paraphenylene terephthalamide (KEVLAR®), and combinations thereof. Suitable resins for use, depending on the fiber, include but are not limited to, thermoplastic resins, thermosetting resins, epoxy, bismaleimide, (BMI), polyester, vinyl ester, nylon, polysulfone, and combinations thereof.

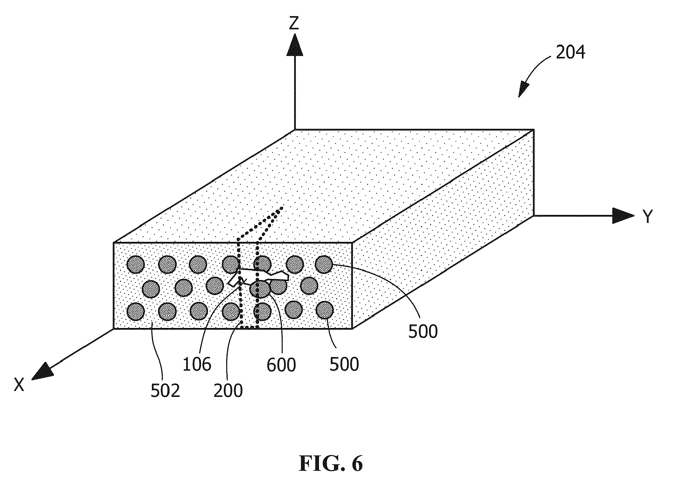

As depicted in FIG. 2, pre-preg component 202 includes a number of voids 106 therein. In accordance with the present disclosure, a plurality of void-reducing channels 200 are created in pre-preg component 202 adjacent voids 106. Before making void-reducing channels 200, non-destructive testing, such as x-ray detection, infrared detection, or ultrasonic detection are use to determine location of voids 106 in pre-preg component 202. Once void 106 is identified, a sharp tool, such as, but not limited to, knife, craft blade, scissors, or needle, is used to create a void-reducing channel 200 perpendicular to fiber orientation in at least one ply 204 of pre-preg component 202. As depicted in FIG. 2, a number of void-reducing channels 200 have been created in each of the plurality of plies 204 of pre-preg component 202. By creating void-reducing channel 200 perpendicular to fiber orientation in pre-preg ply 202, void-reducing channel 200 locally re-orients fiber orientation adjacent to void-reducing channel 200 (see FIG. 6). Is used herein, "locally re-orienting fiber orientation" refers to a fiber 500 at void-reducing channel 200, changing fiber orientation from the original fiber orientation to a fiber orientation that is offset from the original fiber orientation (see FIG. 6). Generally, voids 106, specifically intralaminate (or intraply), cannot be evacuated and removed by vacuum because there is no passage way for the vacuum to access an interlaminate voids, namely, path is extremely torturous. The present disclosure creates a path or void-reducing channel 200 that is less or "untroturous" by forming thru-thickness interconnected passage ways for intraply and interply voids to transport out the part by suction action of vacuum. These void-reducing channels 200 locally nudge the fibers in the thickness direction causing the voids to migrate along that path in the thru thickness direction and toward the vacuum source. The vacated space may then be filled by resin, thereby eliminating void(s).

FIG. 5 depicts a first fiber orientation 504 prior to creating void-reducing channel 200, where all fibers 500 are unidirectional. FIG. 6 depicts second fiber orientation 600 after void-reducing channel 200 locally re-orients fiber 500, making fiber 500 not substantially unidirectional to the remaining fibers 500 and providing a pathway for air and resin to travel through ply 102 during lamination. The additional air pathway allows resin 502 to full penetrate voids 106 and void-reducing channels 200, thereby reducing porosity of laminate formed from pre-preg plies 204 or pre-preg component 202. The compression strength of laminate formed from pre-preg component 202 is increased about 3% per about 1% reduction in porosity of laminate. In one embodiment, laminate formed from pre-preg plies 204 or pre-preg component 202 of present disclosure, is substantially free from intralaminar defects.

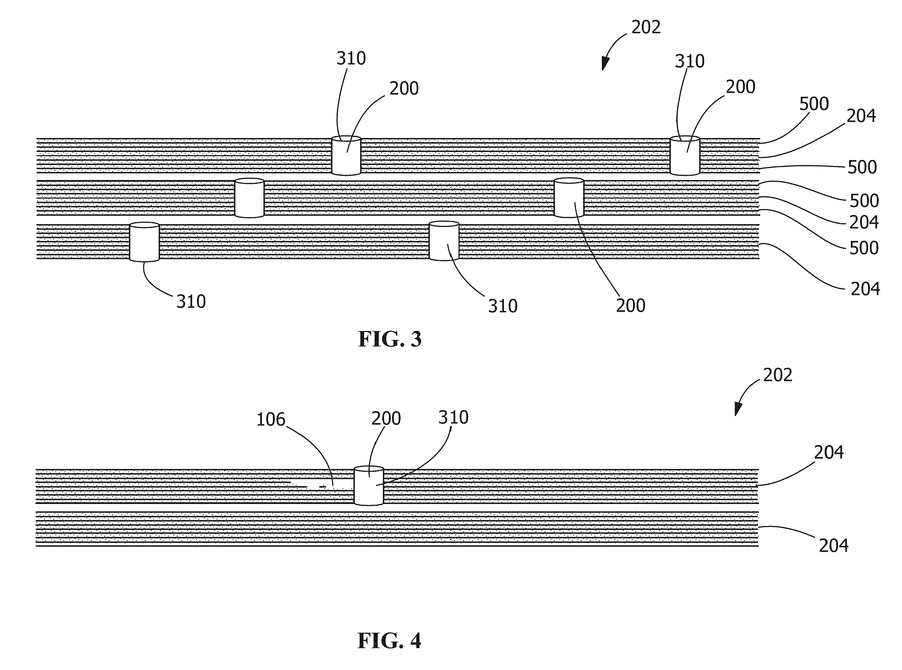

In one embodiment, as shown in FIG. 2, void-reducing channels 200 are created in a predetermined pattern in plurality of pre-preg plies 204 of pre-preg component 202. Void- reducing channel 200 includes any suitable geometry to allow air and resin 502 to pass through unidirectional ply 102, such as, but not limited to, apertures and slits. In one embodiment, when fiber orientation is biaxial, void-reducing channel 200 is an aperture 310 (see FIG. 4). Aperture 310 dimensions include a length or depth of the size of pre-preg ply 204 with an diameter of about 0.3 millimeters to about 2 millimeters, or alternatively about 0.5 millimeters to about 1.7 millimeters, or alternatively about 0.7 millimeters to about 1.5 millimeters. In an alternative embodiment, when fiber orientation is unidirectional, void-reducing channel takes the form of a slit 210 (see FIG. 2). Slit 201 dimensions include a length as long as the pre-preg ply 204 and the width of slit 210 is about 0.1 millimeters to about 0.4 millimeters, or alternatively about 0.15 millimeters to about 0.35 millimeters, or alternatively about 0.2 millimeters to about 0.3 millimeters.

FIG. 3 is a side view of a plurality of pre-preg plies 204 having void-reducing channels 200. In this embodiment, no voids are present, instead the void-reducing channels 200 prevent dry fibers from forming during lamination. By providing void-reducing channels 200 resin 502 is able to flow through pre-preg plies 204 and wet all fibers 500 in pre-preg plies 204 of pre-preg component 200.

FIG. 4 is a side view of pre-preg ply 204 having biaxial fiber orientation of pre-preg component having void 106. Void-reducing channel 200 is formed adjacent to void 106. As depicted, void-reducing channel 200 is aperture 310.

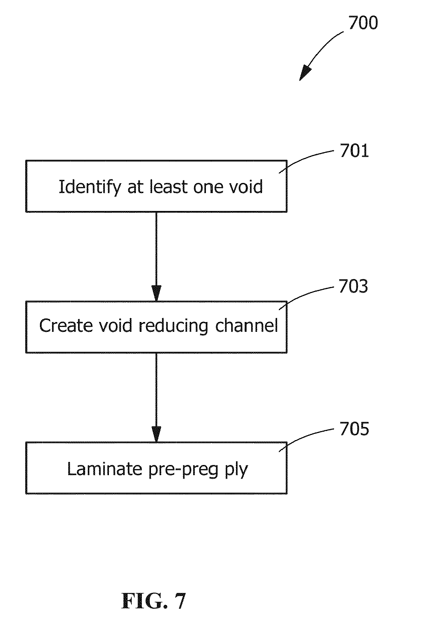

FIG. 7 is a flow chart describing method 700 of removing voids 400 from a pre-preg ply 204. Pre-preg ply 204 has a plurality of fibers 500 and a resin 502. Method 700 includes identifying at least one void 106 in pre-preg ply 204 (see FIG. 5), step 701. Method 700 includes creating at least one void-reducing channel 200 adjacent to the at least one identified void 106 in pre-preg ply 204 (see FIG. 6), step 703. Void-reducing channel 200 is situated perpendicular to first fiber orientation 504 in pre-preg ply 204 (see FIG. 5). Void-reducing channel 200 locally re-orients 600 fibers 500 providing second fiber orientation 600 adjacent to void-reducing channel 200 (see FIG. 6) thereby raising through-thickness air-permeability in pre-preg ply 204. Method 700 includes laminating pre-preg ply 204 (see FIG. 2), step 705. During lamination, step 705, resin 502 fills at least one void 106 and at least one void-reducing channel 200 (see FIG. 5). Step of laminating, step 705, includes applying a vacuum and applying heat. Applying vacuum pulls resin 502 through void 106 and provides capillary action to move resin 502 through pre-preg plies 204. Applying heat increases the viscosity of resin 502 to allow resin 502 to flow through pre-preg plies 204. Applying heat also cures resin 502 which cross-links to form laminate component.

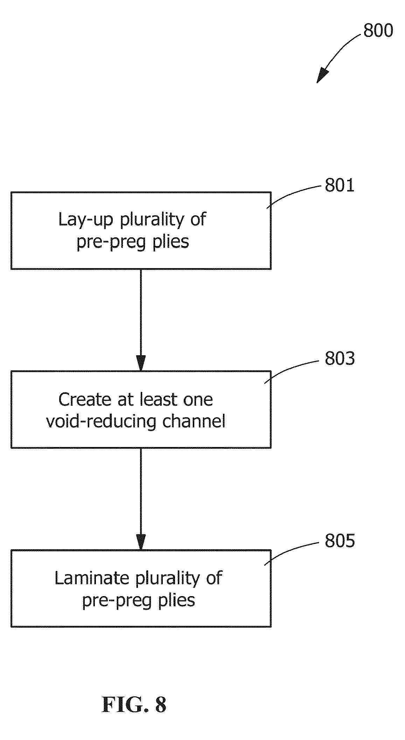

FIG. 8 is a flow chart describing method 800 of making laminate component. Method 800 includes laying up plurality of pre-preg plies 204 in a desired geometry (see FIG. 2), step 801. Plurality of pre-preg plies 204 include plurality of fibers 500 and resin 502 (see FIG. 5). Method 800 includes creating at least one void-reducing channel 400 in at least one ply of the plurality of pre-preg plies 204 (see FIG. 6), step 803. As shown in FIGS. 5 and 6, void-reducing channel 200 is perpendicular to first fiber orientation 504 (see FIG. 5) in the at least one ply 204 and void reducing channel 200 locally re-orients the fiber 500 to a second fiber orientation 600 (see FIG. 6) adjacent to void-reducing channel 200 in the at least one pre-preg ply 204. Method 800 includes laminating plurality of pre-preg plies 204 causing resin 502 to fill at least one void-reducing channel 200, step 805. The resulting laminate component has a reduced porosity and increased compression strength of about 1% to about 3%.

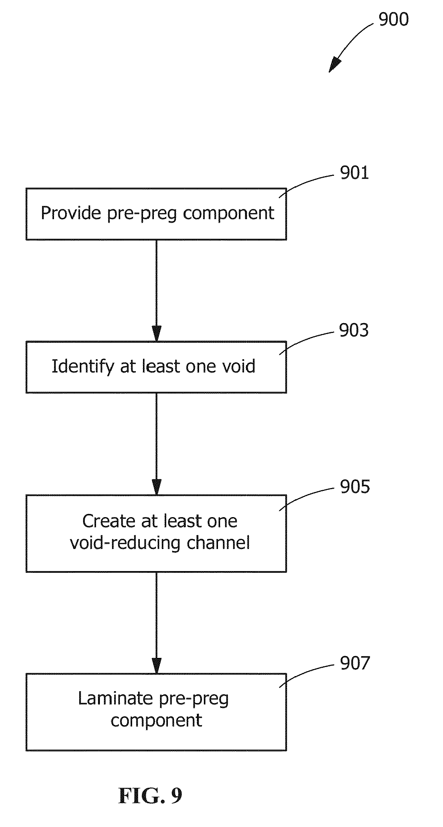

FIG. 9 is a flow chart describing method 900 of removing voids from pre-preg component 202. Method 900 includes providing pre-preg component 202 (see FIG. 2), step 901. Pre-preg component 202 includes a plurality of plies 204 including a plurality of fibers 500 and a resin 502. Method 900 includes identifying at least one void 106 in at least one ply 204 of pre-preg component 202 (see FIG. 2), step 903. Suitable examples of non-destructive method of identifying voids 106, include, but are not limited to, infrared detection, ultrasonic detection, x-ray detection, and any other suitable non-destructive testing method. Method 900 includes creating at least one void-reducing channel 200 through a portion of the identified at least one void 106 (see FIG. 2), step 905. A sharp objects, such as, but not limited to, knives, craft blades, needles, scissors, are used for creating void-reducing channel 200 in pre-preg component 202. Void-reducing channel 200 is perpendicular to a fiber orientation in at least one ply 204 (see FIG. 5). Void-reducing channel 200 locally re-orients the fiber orientation adjacent to void-reducing channel 200 in the at least one pre-preg ply 204 (see FIG. 5). Method 900 includes laminating pre-preg component 202 (see FIG. 2), step 907. Step of laminating, step 907, allows resin 502 to fill the at least one void-reducing channel 200 and the at least one void 106.

### Examples

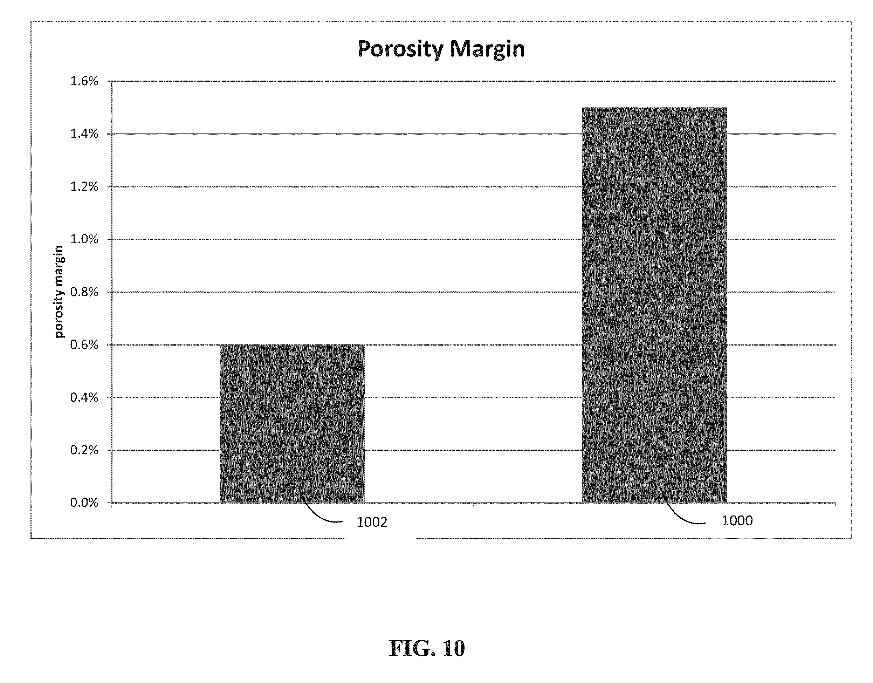

For example, as shown in FIG. 10, porosity margin of the present disclosure 1000 is compared to that of a traditionally prepared laminate part 1002. It is understood that laminate parts or panels have an allowable level of porosity for that particular part or panel, which is generally specified by the manufacturer of that part or panel. The porosity margin is the difference between the actual porosity and the allowable level of porosity. The greater the porosity margin, the stronger the part or panel.

A panel is prepared according to the present disclosure. The panel size is about 1200 millimeters by about 300 millimeters. The panel is constructed by lying up about 50 plies of unidirectional carbon pre-preg plies including an epoxy resin. The plies are then laminated to form a laminated panel. After lamination, a stereo-microscope with low magnification (less than 50x) is used to evaluate the cross-section of the laminated panel to determine the location of voids in laminated panel. A high-strength steel tool with pointed tip having a diameter of less than 0.5 millimeters is used to create through-thickness passageways or void reducing channels 200 in the laminate panel. The pointed tip is driven into the laminate panel to re-orient the fibers to facilitate flow of the entrapped air existing in the laminate in the through-thickness direction. The through-thickness passageways in the laminate panel facilitate breathing and air-evacuation of the laminate panel, especially for thick pre-pregs, during cure. The high-strength steel tool is used to create a pattern of void-reducing channels in laminate panel. The pattern includes creating about 20 rows of 5 through-thickness holes per meter of length of the laminate. The laminate panel is cured for a number of hours at a temperature of less than 150°C on a heated mold using a multi-step cycle to create a cured panel. The cured panel is cut using a saw and is polished for in preparation to use with a microscope. A stereo-microscope with low magnification (less than 50x) is used to determine the porosity measurement of the cured panel. The porosity was measured to be less than about 2%. Generally, the allowable porosity of cured panel constructed from a carbon pre-preg having about 50 plies is less than 5%. The porosity margin of the cured panel is calculated by subtracting the allowable level of porosity from the measured porosity of the cured panel. The porosity margin is about 1.5% for the cured panel according to an embodiment of the present disclosure.

A comparison part is formed by laying up about around 50 unidirectional carbon pre-preg plies including an epoxy resin. The plies are then laminated to form a comparison laminated part. The comparison laminated part is cured for a number of hours at a temperature of less than 150°C on a heated mold using a multi-step cycle to create a cured comparison laminated part. The comparison cured part is cut using a saw and is polished in preparation to use with a microscope. A stero-microscope with low magnification (less than 50x) is used to determine the porosity measurement of the cured comparison part. The porosity was measured to be less than about 2%. Generally, the allowable porosity of the comparison cured part from a carbon pre-preg having about 50 plies is less than about 5%. The porosity margin of the comparison cured part is calculated by subtracting the allowable level of porosity from the measured porosity of the comparison cured part. The porosity margin of the comparison cured part is about 0.6%.

As illustrated by FIG. 10, the panel prepared according to the present disclosure has a greater porosity margin than a part prepared using known methods. The increased porosity margin indicates that the panel prepared according to the present disclosure will have greater strength.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of making a laminate component comprising:
laying up a plurality of pre-preg plies in a desired geometry, the plurality of pre-preg plies having a plurality of fibers and a resin;
creating at least one void-reducing channel in at least one ply of the plurality of pre-preg plies, the at least one void-reducing channel being perpendicular to a fiber orientation in the at least one ply, wherein the at least one void-reducing channel locally re-orients the fiber orientation adjacent to the at least one void-reducing channel in the at least one pre-preg ply; and
laminating the plurality of pre-preg plies, wherein the resin fills the at least one void-reducing channel,
wherein the laminate component has a porosity margin of about 1.5%.

2. The method of claim 1, wherein the at least one void-reducing channel is created in a predetermined pattern in the plurality of pre-preg plies.

3. The method of claim 1 or claim 2, wherein the at least one void-reducing channel is an aperture having a diameter of about 0.3 millimeters to about 2 millimeters, or wherein the at least one void-reducing channel is a slit having a width of about 0.1 millimeters to about 0.4 millimeters.

4. The method of any preceding claim, wherein the at least one void reducing channel is created using a sharp object.

5. The method of any preceding claim, wherein the plurality of pre-preg plies comprise carbon, glass, basalt, poly-paraphenylene terephthalamide and combinations thereof.

6. The method of any preceding claim, wherein the plurality of fibers of the plurality of pre-preg plies are arranged in a unidirectional orientation, biaxial orientation, biaxial weave, and combinations thereof.

7. The method of any preceding claim, wherein the plurality of fibers are arranged in a unidirectional orientation and have a high tow count.

8. The method of any preceding claim, wherein the step of laminating includes applying a vacuum to cure the laminate.

9. The method of any preceding claim, wherein the step of laminating includes applying heat to cure the laminate.

10. A method of removing voids from a pre-preg ply, the pre-preg ply having a plurality of fibers and a resin, the method comprising:
identifying at least one void in the pre-preg ply;
creating at least one void-reducing channel adjacent to the at least one identified void in the pre-preg ply, the at least one void-reducing channel being perpendicular to a fiber orientation in the pre-preg ply, wherein the at least one void-reducing channel locally re-orients the plurality of fibers adjacent to the at least one void-reducing channel and increases through-thickness air-permeability in the pre-preg ply; and
laminating the pre-preg ply, wherein the resin fills the at least one void and the at least one void-reducing channel.

11. The method of claim 10, wherein the at least one void-reducing channel is created using a sharp object.

12. The method of claim 10 or claim 11, wherein the plurality of fibers of the pre-preg ply are arranged in a unidirectional orientation, biaxial orientation, biaxial weave, and combinations thereof.

13. A method of removing voids from a pre-preg component comprising:
providing the pre-preg component, the pre-preg component having a plurality of plies including a plurality of fibers and a resin;
identifying at least one void in at least one ply of the pre-preg component;
creating at least one void-reducing channel through a portion of the identified at least one void, the at least one void-reducing channel being perpendicular to a fiber orientation in the at least one ply, wherein the at least one void-reducing channel locally re-orients the plurality of fibers adjacent to the void-reducing channel in the at least one pre-preg ply; and
laminating the pre-preg component, wherein the resin fills the at least one void-reducing channel and the at least one void.

14. The method of claim 10 or claim 13, wherein the at least one void-reducing channel is an aperture having a diameter of about 0.3 millimeters to about 2 millimeters.

15. The method of claim 13, wherein the at least one void-reducing channels are created using a sharp object.
